(19) Europäisches Patentamt
European Patent Office
Office européen des brevets

(11) **EP 1 916 081 A1**

(12) **EUROPEAN PATENT APPLICATION**

(43) Date of publication:
**30.04.2008 Bulletin 2008/18**

(51) Int Cl.:
**B29C 45/00** *(2006.01)* **C08K 7/20** *(2006.01)*

(21) Application number: **06123008.2**

(22) Date of filing: **26.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Koninklijke Philips Electronics N.V.**
**5621 BA  Eindhoven (NL)**

(72) Inventor: **The designation of the inventor has not yet been filed**

(74) Representative: **Engelfriet, Arnoud Peter**
**Philips**
**Intellectual Property & Standards**
**P.O. Box 220**
**5600 AE Eindhoven (NL)**

(54) **A molded body having a wall comprising a transparent polymeric material and glass particles**

(57)    A molded body (102) comprising
- a wall having a wall thickness, between a minimum and a maximum value
- the wall comprising a transparent polymeric material and glass particles (104) being embedded in the polymeric material,
- said glass particles having a shape of an air-bubble and having a particle size in a range of 0.3 mm to 0.9 times the maximum value of the wall thickness.

The effect of using air-bubble shaped glass particles having the particle size in the range of 0.3 mm to 0.9 times the maximum wall thickness, is that the particles are individually visible to the human eye inside the transparent body. These individually visible particles give the visual appearance of inclusions of air-bubbles or droplets inside the transparent polymeric material.

The molded body can be obtained by mixing-in glass particles into a transparent polymer matrix material by injection molding techniques known per se.

Figure 2

**Description**

FIELD OF THE INVENTION

The invention is related to a molded body comprising a wall having a wall thickness, between a minimum and a maximum value, the wall comprising a transparent polymeric material and glass particles being embedded in the polymeric material.

The invention further relates to an appliance comprising a molded body, a use of glass particles, a polymer composition and a method of manufacturing a molded body.

DESCRIPTION OF THE PRIOR ART

There is a need to create the effect of air bubbles as visual appearance in products.

The state of the art way to create a visual effect of air bubbles in transparent materials is to use and control air to initiate voids.

In US 6,672552 a supporting rod is described made of a transparent plastic material through injection molding and having a row of air bubbles formed therein during the injection molding.

The process to create air bubbles in a plastic injection molded part is a difficult process.

If voids or gas inclusions are desired, a way to obtain them is by using a natural stress process as described below or add gas to the molded plastic.

During injection molding plastic is molded and at elevated temperature injected into a mould. Thereafter the plastic in the mould cools down to room temperature and as a result the plastic shrinks. The cooling down process of a plastic part starts at the surface of the part, the surface being in contact with the mold. After a certain time the plastic at surface of the part solidifies, this is referred to as an outer layer, while the inside of the part is still in a fluid like state. The shrinking causes forces of contraction also called stress in the plastic material. As a result of this stress voids may form in the region of the core of the plastic and / or sink marks at the surface of the part. In case the outer layer has solidified to a sufficiently thick layer providing a certain strength, the layer can withstand the forces caused by the cooling and shrinking of the plastic and the surface of the part does no or only partly yields to the stress.

A common procedure to reduce void and/or dent formation is to give an additional feed of plastic material into the mold to compensate for the shrinking effect and to make sure the mould is filled. If voids are intended, skipping the additional feed of material, also called a packing, is a possibility to try to get the voids on purpose. The voids usually arise at those places in the part where stress occurs, typical places are thicker portions of the part and a transition location where a rib part is connected to a wall part. These places are the location where the effect of the cooling of the outer while at the core of the part the plastic mass is still hot is the biggest. Chemicals are sometimes added to the material to initiate voids more easily, for example foaming agents.

It is rather difficult to obtain voids in a controlled manner. This is especially the case for thin walls. In thin walls there is hardly any stress formation that can cause voids, the distance from the outsides of the wall to the center is small and the cooling easily reaches the center without causing the stress caused by warm plastic at the inside. If the outsides of the wall are substantially parallel, stress simply pulls the outsides of the wall to each other resulting in a thinner wall without creating voids.

SUMMARY OF THE INVENTION

It is an object of the invention to provide a molded body having a wished appearance, which appearance can be manufactured in an easier way.

This object is achieved by the molded body according to the invention, as defined in claim 1.

The molded body according to the invention comprises

-    a wall having a wall thickness, between a minimum and a maximum value
-    the wall comprising a transparent polymeric material and glass particles being embedded in the polymeric material,
-    the glass particles having a shape of an air-bubble and having a particle size in a range of 0.3 mm to 0.9 times the maximum value of the wall thickness.

It is to be noted that in this paper air-bubble shaped particles includes, without being limited thereto, particles being sphere shaped, ball shaped, droplet shaped, soap bubble shaped, kidney shaped, bowl shaped, rugby ball shaped and egg shaped.

The effect of using air-bubble shaped glass particles having the particle size in the range of 0.3 mm to 0.9 times the maximum wall thickness, is that the particles are individually visible to the human eye inside the transparent body.

These individually visible particles give the visual appearance of inclusions of air-bubbles or droplets inside the transparent polymeric material.

The molded body can be obtained by mixing-in glass particles into a transparent polymer matrix material by injection molding techniques known per se. This way the molded body according to the invention as claimed in claim 1, can be obtained in an easy way. This way the object of the invention is achieved.

The visual appearance of bubbles or droplets provides an attractive visual appearance.

Glass particles having the particle size of at least 0.3 mm in the transparent polymer matrix can be seen individually by the average naked human eye.

The particles should not be too large in relation to the wall thickness of the wall of the body, because other wise they may stick out of the surface of the wall. Particles having an particle size which is less than 0.9 x the maximum value of the wall thickness are suitable for this and prevent such unwanted effect.

In this application the particle size refers to the largest distance in the particle.

The skilled person may take the design of the mould and the location of the injection nozzle into account in selecting the size of the particles. The skilled person may for instance select a particle size of 0.3 mm to 0.9 times the value of the wall thickness of the wall portion located at the injection nozzle.

In case the skilled person wants a distribution of the particles throughout the molded body, a particle size of 0.3 mm to 0.9 times the minimum value of the wall thickness is safe choice.

The body according to the invention may be manufactured using a known moulding technique such as injection moulding, insert moulding, pipe extrusion, sheet extrusion, blow moulding, rotational moulding, compression moulding two-component injection moulding etc., to obtain the body according to the invention.

The glass particles used have to fit through the nozzle of the moulding machine. In that situation a practical choice is to select the particle size being less than 0.7 x the smallest gate size of the injection nozzle.

Selecting the particle size in a range of 1.0 - 2.0 mm may result in a body resembling the appearance of a bubbling or fizzing soft drink. The molded body comprising glass particles having the particle size in the range 1.0 - 2.0 mm provide a sparkling visual appearance. Such an appearance is in particular provided if transparent sphere shaped particles are used.

The glass particles used may not all be exactly the same size, this means that the stand deviation of the particle size distribution of the particles is larger than zero. Preferably the standard deviation of the amount average particle size is in a range of 0.05-0.1 mm. The standard deviation that can be used depends on the wall thickness. The skilled person knows how to select the appropriate particles size and standard deviation for a particular body having the minimum and maximum wall thickness such that the polymer matrix of the wall encapsulates the particles.

The process conditions that are used are normal injection molding process conditions. Under such conditions the packing can be applied to avoid dents in a similar manner as regular molding conditions. This way the appearance of air bubbles can be obtained without the risk dent formation other than that would appear under normal molding conditions. The molded body can thus have a surface evenness that is equal to normal injection molding conditions and at the same time have the appearance of for instance air-inclusions.

It is known per se that the haze value is the percentage of light which, in passing through a specimen, is deviated by "forward scattering." To determine the haze only light scattered more than 2.5° from the incident light is considered. When measuring haze, the percentage of light diffusely scattered compared to the total light transmitted is reported.

ASTM D1003: Haze is the percentage of light that, in passing through a specimen, deviates from the incident beam by forward scattering. Only light flux deviating more than 2.5 degrees on average is considered to be haze.

$$\% \text{ Haze} = [\text{intensity of light scattered more than 2.5 degrees} \ / \ (\text{intensity of scattered} + \text{regular transmitted light})] \times 100\%$$

In this paper the transparent polymeric material is a polymeric material having a % Haze of maximum 60%.

The transparent polymeric material having the % Haze of maximum 30% may have a more pronounced effect.

Examples of suitable polymeric materials include, without being limited thereto Polyethylene terephthalate (PET), Polymethyl methacrylate (PMMA), polypropylene (PP homoplymer and copolymer), polystyrene (PS), Ethylene-vinyl acetate (EVA), polyethylene (PE), high density polyethylene (HDPE), low density polyethylene (LDPE), polycarbonate (PC), Styrene Methylmethacrylate copolymer (SMMA), Transparent acrylonitril butadiene styrene (MABS), polyvinylchloride (PVC), styrene acrylonitrile (SAN), polyether sulphone (PSU or PES), thermoplastic polyurethane (TPU), polyamide (PA), Cyclo Olefin Copolymer (COC), perfluoro-alkoxyalkane (PFA) and polyethylene imine PEI.

The polymeric material may comprise a dye or a pigment or other additives as long as the haze is maximum 60% measured according to ASTM D 1003.

Hence the molded body according to the invention may comprise a colourless or a coloured polymeric material.

The coloured polymeric matrix material may increase the visual contrast between the glass particle and the polymer matrix and thus enhance the visual effect. In case for instance a blue colourant is used, the body may get a water-like appearance, such as a spa or a sparkling pool. An example of the body according to the invention is a blue transparent body comprising transparent glass beads.

The particles embedded in the polymeric material of the molded body according to the invention be colored such as yellow, green blue, red orange or a combination thereof. The skilled person can select any color or combination to obtain for instance a cheerful or festive appearance in an easy way.

In an embodiment of the body according to the invention the particles are transparent. This gives an attractive see through, in depth visual appearance. For instance transparent blue particles in the colourless transparent polymeric material give the visual effect of water droplets or water inclusions being present inside the colourless transparent polymer matrix.

Transparent, colorless, particles in the transparent polymeric material give the effect of air bubbles being present inside the polymer matrix. This way the body is provided having the visual effect of comprising air bubbles in an easier way. This may result in a fresh appearance of the molded body in an easy way. The look-alike-air particles will be distributed throughout the part, the wall thickness permitting the glass particles to fit in a polymeric volume of a particular region of the part. Because each part is molded individually, each part may have a slightly different distribution of the particles, this way each part may have a unique appearance.

Successful results were obtained by mixing glass balls of diameter 1 mm into MABS Terlux TR2802 Q434 (transparent Acrylonitril Butadiene Styrene polymer) and injection mould the composition into a thin walled part. The polymer of the thin walled part appears to include air bubbles.

The invention may be used to create a visual effect of air bubbles in thin walled transparent moulded products. In an embodiment of the body according to the invention the wall has the visual appearance of comprising gas bubbles, without using gas-like inclusions. This way the invention provides the body, which is very difficult to realize by means of the techniques known and used thus far.

A fresh appearance is for instance achieved by transparent colorless particles embedded in the colorless, transparent polymeric material. In an embodiment of the body according to the invention a difference between the refractive index of the polymer matrix and the particles results in the effect that the particles are visible by the naked eye. This way the average human eye is able to see the particles inside the polymer matrix and the visual effect resulting from the particles is obtained in an easy way.

In an embodiment of the body according to the invention the particles comprise a notch or a protrusion. Air bubble shaped particles having the notch or protrusion are more coarsely shaped, examples of such shapes are star shaped particles, polyhedron shaped such as pyramid shaped or golf ball shaped i.e. a ball having dents. These more irregularly shaped particles result in a more course, rough effect compared to the air bubble shaped particles a such.

A translucent particle may give a frosted particle or ice crystal effect. Especially if the particles are shaped like a star or have very irregularly rock like shape.

In an embodiment of the body according to the invention the wall is thin, in such a thin-walled body the minimum wall thickness is at least 0.4 mm and the maximum wall thickness is at least 6 mm. In the context of this application the wall thickness of a thin wall is in a range of 0.4 - 6.0 mm.

The known techniques described above are not suitable for to make thin walled plastic products: due to the shrinking process the surface has dents after ejection of the part out of the mold.

To obtain voids during injection moulding in a thin walled body is very difficult. Usually no voids are obtained because no stess occurs, or in case stress does occur usually mainly dents are formed in the surface of the body.

By including transparent, colourless glass particles having a shape of an air-bubble into the transparent polymeric wall the visual appearance of air inclusions is obtained in an easy way. By using the packing, dents in the surface of the wall of the molded body may be prevented.

The invention is especially suitable to create the body according to the invention wherein the wall has a wall length and the ratio of the wall length divided by the wall thickness is at least 5. In an embodiment of the body according to the invention the wall has a length in a range of 5 to 200 times the maximum value of the wall thickness, e.g. the wall has a length in a range of 15 to 150 times the maximum value of the wall thickness.

The length is defined as the largest distance the polymer has to travel in the mould: from the center of the injection nozzle to the furthest edge of the part.

During injection molding the polymeric material is pushed towards the end of the mold using pressure. As the polymer travels from the nozzle to the edge of the part the pressure in the polymer decreases. The longer the path to travel the higher the pressure has to be at the beginning; at the nozzle. If gas is injected at or close to the nozzle the gas bubbles travel along with the polymer material towards the edge. During this journey the pressure in the polymer matrix decreases and the gas bubble will expand. The effect is that the gas bubble close to the nozzle are smaller than those close to the edge. In the body according to the invention glass particles are used. The particles at the nozzle and at the edge will have the same size or size distribution, this is the size that they were when they were added to the polymer matrix material. They are not influenced by the difference in pressure the polymer matrix is subjected to as it travels from the nozzle to the edge. This leads to a more homogenous distribution of the particles and a more homogeneous visual appearance. The skilled person can select a bubble appearance before hand by selecting the size of the glass particles.

In an embodiment of the body according to the invention the wall comprises 0.5-40 wt% glass particles and 60-99.5 wt% transparent polymeric material. The amount of particles in the body is preferably between 3 wt% and 20 wt%.

The visual appearance of the molded body depends on the amount of particles in combination with the size of the particles.

In an embodiment of the body according to the invention the body comprises a film attached to at least a part of the wall.

The film may be present, from the viewer's point of view above or underneath the body.

Having a coloured layer underneath the body may increase the visual contrast between the matrix and the particles.

Having a transparent colored layer above the body may increase the impression of bubbles at a depth.

In an embodiment of the body according to the invention the film comprises a decoration, logo or information to provide the user with a visual impression.

In an embodiment of the body according to the invention the body is at least a part of reservoir for holding a substance such as a liquid or a gel. This visual effect obtained in an easy way by the invention can for instance be attractive for use as a water reservoir of a coffee maker, or a part of a housing of a shaver.

In an embodiment of the body according to the invention the body is at least a part of a housing of a domestic appliance, a personal care appliance or a health care appliance.

In an embodiment of the body according to the invention, the body is a covering piece which is intended to be positioned at an outer side of a domestic appliance such as a coffee maker, an iron, a vacuum cleaner and various personal care products such as a shaver, an epilator, a depilator or a toothbrush.

Embodiments of the holder according to the invention are a bottle, a beaker, a water reservoir for a coffee or thee maker, a jar, a jug, a box, a bijouterie casket, a terrine, a bowl, a container, a vase and a cartridge. Examples of the substance are a liquid such as water, a gel such as a shaving gel, a crème, a powder, granules, particles, beads, paperclips, fruit, soup, milk, soft drink.

The invention further relates to a polymer composition.

The polymer composition according to the invention comprises a transparent polymeric material and glass particles having a shape of an air-bubble at least part of said particles being in a particle size range of 0.6 - 3.0 mm.

In case the composition is in the form of granules of up to 3 mm diameter, the particle size range of 0.6 - 1.2 mm may be practical.

The polymer composition may be used to manufacture the molded body according to the invention.

In an embodiment of the polymer composition the amount of particles is between 0.1 wt% and 80 wt %.

In an embodiment of the polymer composition the amount of particles the amount of particles is between 0.4 and 40 wt %.

The invention further relates to an appliance comprising the molded body according to any one of the claims 1-12 and being defined by these claims, the molded body comprising

- a wall having a wall thickness, between a minimum and a maximum value
- the wall comprising a transparent polymeric material and glass particles being embedded in the polymeric material,
- the glass particles having a shape of an air-bubble and having a particle size in a range of 0.3 mm to 0.9 times the maximum value of the wall thickness.

The invention further relates to the use of transparent, colorless, air bubble shaped, glass particles in a molded body comprising

- a wall having a wall thickness, between a minimum and a maximum value,
- the wall comprising a transparent polymeric material and glass particles being embedded in the polymeric material and
- the glass particles having a particle size in a range of 0.3 mm to 0.9 times the maximum value of the wall thickness, to provide a visual appearance of air bubbles.

This way the effect of the appeared presence of air inclusions is obtained in an easy way.

The invention further relates to a method of manufacturing a molded body having a wall having a wall thickness, between a minimum and a maximum value the wall comprising a transparent polymeric material and the glass particles being embedded in the polymeric material, comprising the steps of:

- kneading the glass particles having a shape of an air-bubble and having a particle size in a - range of 0.3 mm to 0.9 times the maximum value of the wall thickness together with the transparent polymeric material and thereafter
- shaping the body by means of injection molding.

This way the body according to the invention is obtained.

The glass particles may for instance be added as such to polymer granulate in the hopper of the moulding machine or may be added as a masterbatch.

A masterbatch is a concentrate of polymer matrix comprising a concentration of particles that is higher than the concentration in the molded body. During the molding process the masterbatch is added to polymer granules, this way the concentration of particle is diluted to obtain the desired concentration in the molded body. A suitable masterbatch comprises 40-80 weight % glass particles in a transparent polymer matrix having a shape of an air-bubble and having a particle size in a range of 0.3 - 6 mm.

Alternatively the polymer granules comprise the desired amount of particles and are used as such for moulding.

It is to be noted that US 2003/0175499 describes compositions and methods for imparting a translucent optical effect to transparent thermoplastics polymers. The translucent optical effects described are obtainable in a continuum of very smooth to very grainy. The composition comprise the thermoplastic polymer and 0.01 to 15 parts per hundred weight of a light diffusing material comprising an average maximum size of from about 0.1 microns to about 200 microns. The mixture may be moulded extruded or formed by conventional means to form a translucent polymer product. In US 2003/0175499 the term transparent is intended to encompass all grades of thermoplastic polymers that are near transparent as well as transparent.

A slightly grainy visual translucency is obtained by using transparent particulates, such as solid glass microspheres having a particle diameter of about 2 to about 100 microns (preferably about 4 to about 44 microns) or hollow glass microspheres having a particle diameter of about 10 to 100 microns (preferably about 65 to about 75 microns).

The invention also includes any possible combination of features or subject matter as claimed in any one of the claims.

The invention will now be exemplarily described with reference to the accompanying drawings. In principle aspects can be combined.

BRIEF DESCRIPTON OF DRAWINGS

Figure 1 schematically depicts air-bubble shaped glass particles.

Figure 2 schematically depicts a first embodiment of the appliance comprising the molded body according to the invention.

Figure 3 schematically depicts a second embodiment of the appliance comprising the molded body according to the invention.

Figure 4 schematically depicts a third embodiment of the appliance comprising the molded body according to the invention.

Figure 5 schematically depicts a fourth embodiment of the appliance comprising the molded body according to the invention.

Figure 6 schematically depicts a fifth embodiment of the appliance comprising the molded body according to the invention.

Figure 7 schematically depicts a sixth embodiment of the appliance comprising the molded body according to the invention.

Figure 8 schematically depicts a seventh embodiment of the appliance comprising the molded body according to the invention.

Figure 9 schematically depicts a ninth embodiment of the molded body according to the invention.

Figure 9a schematically depicts the ninth embodiment of the molded body according to the invention along the line I-I indicated in figure 9.

Figure 9b schematically depicts an alternative to the ninth embodiment of molded body according to the invention along the line I-I indicated in figure 9.

Figure 10 is a microscopic picture of boronsilicate, 1mm diameter solid-glass beads Z273619 1EA (Sigma Aldrich, Germany).

Figure 11 is a picture of a tenth embodiment of the molded body according to the invention.

Figure 12a schematically depicts a first visual impression of a part of the embodiment of the molded body according to the invention.

Figure 12b schematically depicts a second visual impression of a part of the embodiment of the molded body according to the invention.

Figure 13a schematically depicts schematically depicts a third visual impression of a part of the embodiment of the molded body according to the invention.

Figure 13b schematically depicts schematically depicts a fourth visual impression of a part of the embodiment of the molded body according to the invention.

Figure 14a schematically depicts schematically depicts a fifth visual impression of a part of the embodiment of the molded body according to the invention.

Figure 14b schematically depicts schematically depicts a sixth visual impression of a part of the embodiment of the molded body according to the invention.

DETAILED DESCRIPTON OF DRAWINGS

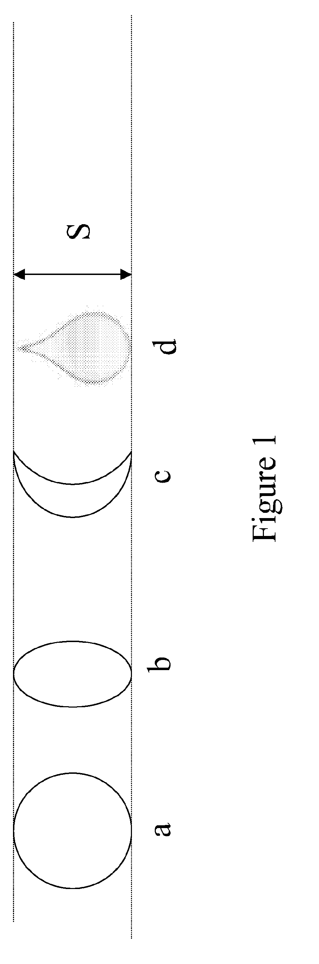

In Figure 1 examples of air-bubble shaped glass particles are schematically depicted.

The particles size (S) is referring to the largest distance in the particle. In figure 1 two-dimensional representations show a ball-shaped (a), an rugby ball-shaped (b), a moon-shaped (c) and a droplet shaped (d) particle, respectively.

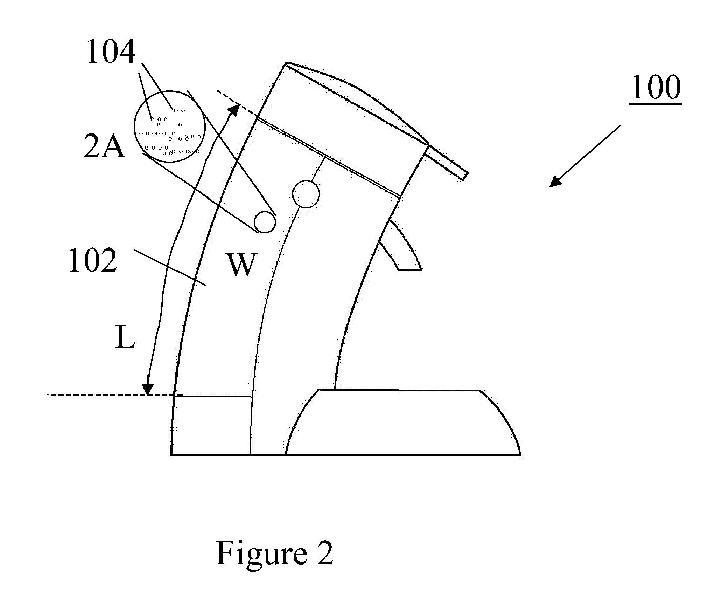

Figure 2 depicts a coffee maker 100 according to the invention comprising a water tank 102 according to the invention. The water tank is made from transparent plastic material such as polypropylene comprising glass particles 104 embedded in the polymeric material.

The water tank may for instance have a wall length (indicated by letter L) of 25 cm and a wall thickness, measured at a position covered by this length (position indicated by letter W) of 2 mm. The wall thickness is oriented perpendicular to the wall length. The ratio wall length : wall thickness being 250:2 = 125 :1. Thus, the wall has a length of 125 times the maximum value of the wall thickness.

The glass particles have a shape of an air-bubble and have a particle size in a range of 0.3 mm to 1.5 mm.

Reference 2A schematically depicts an enhanced view of a part of the water tank 102 indicating glass balls 104 having the shape of an air bubble.

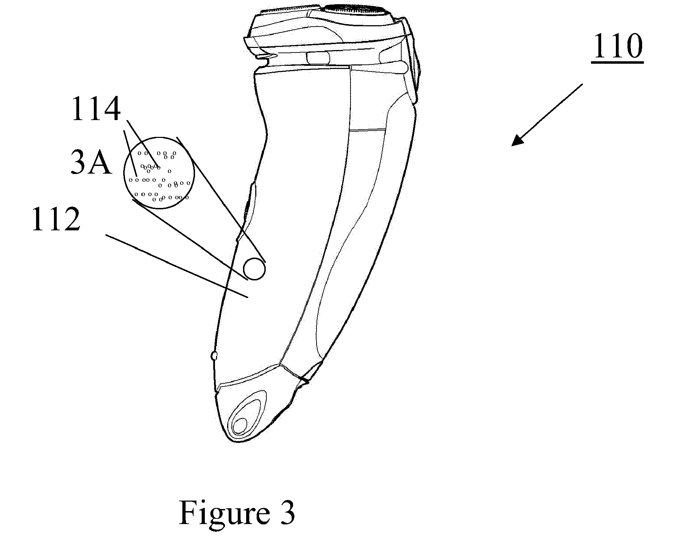

Figure 3 depicts a shaver according to the invention 110 comprising a part of a housing 112 according to the invention. The part of the housing 112 is made from transparent plastic material such as MABS comprising glass particles embedded in the polymeric material.

Reference 3A schematically depicts an enhanced view of a part of the housing 112 indicating glass balls 114 having the shape of an air bubble.

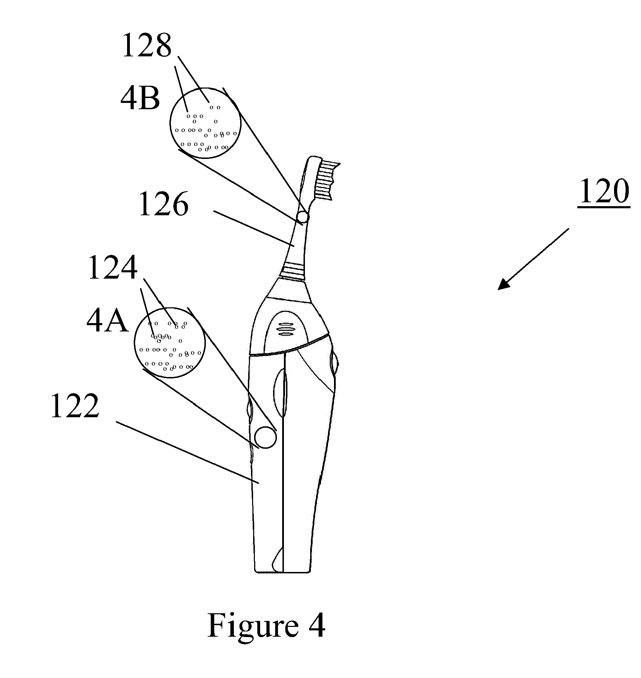

Figure 4 depicts a toothbrush according to the invention 120 comprising a part of a housing 122 according to the invention. The part of the housing 122 is made from transparent plastic material such as co-polyester comprising glass particles embedded in the polymeric material.

Reference 4A schematically depicts an enhanced view of a part of the housing 122 indicating glass balls 124 having the shape of an air bubble.

The toothbrush 120 further comprises a brush stick 126 according to the invention made from transparent plastic material such as co-polyester comprising glass particles embedded in the polymeric material.

Reference 4B schematically depicts an enhanced view of a part of brush stick 126 indicating glass balls 128 having the shape of an air bubble.

These features -the part of housing 122 and the brush stick 126- may be applied separately.

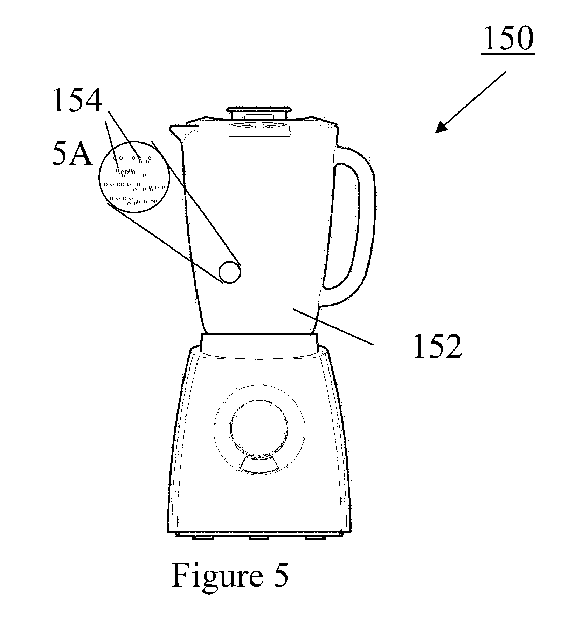

Figure 5 depicts a blender according to the invention 150 comprising ajar 152 according to the invention. The jar 152 is made from transparent plastic material such as SAN comprising glass particles embedded in the polymeric material.

Reference 5A schematically depicts an enhanced view of a part of jar 152 indicating glass balls 154 having the shape of an air bubble.

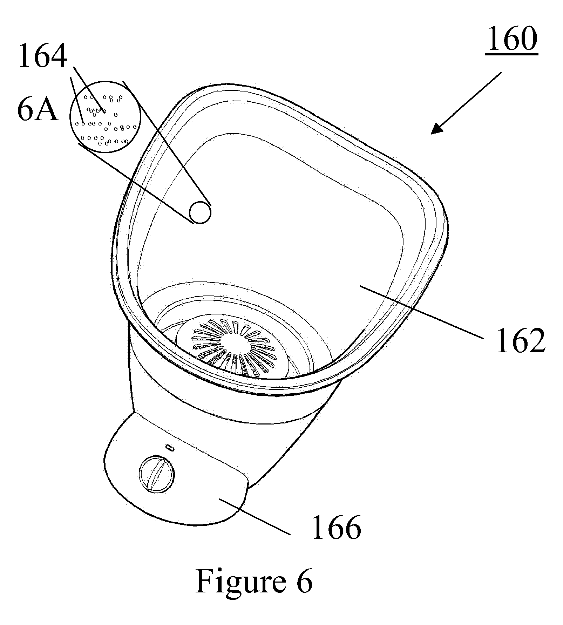

Figure 6 depicts a facial sauna according to the invention 160 comprising a steaming mask 162 according to the invention. The steaming mask 162 is made from transparent plastic material such as SAN comprising glass particles embedded in the polymeric material.

Reference 6A schematically depicts an enhanced view of a part of the steaming mask 162 indicating glass balls 164 having the shape of an air bubble.

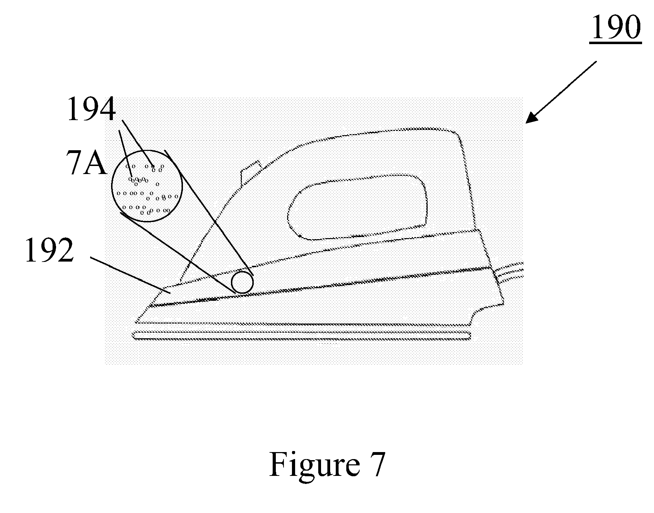

Figure 7 depicts an iron according to the invention 190 comprising a water tank 192 according to the invention. The water tank 192 is made from transparent plastic material such as polycarbonate comprising glass particles embedded in the polymeric material.

Reference 7A schematically depicts an enhanced view of a part of the water tank 192 indicating glass balls 194 having the shape of an air bubble.

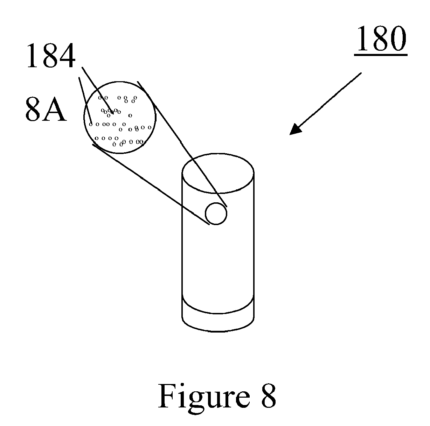

Figure 8 depicts a drinking beaker 180 according to the invention, the beaker is made from transparent plastic material such as polystyrene comprising glass particles embedded in the polymeric material.

Reference 8A schematically depicts an enhanced view of a part of the beaker 180 indicating glass balls 184 having the shape of an air bubble.

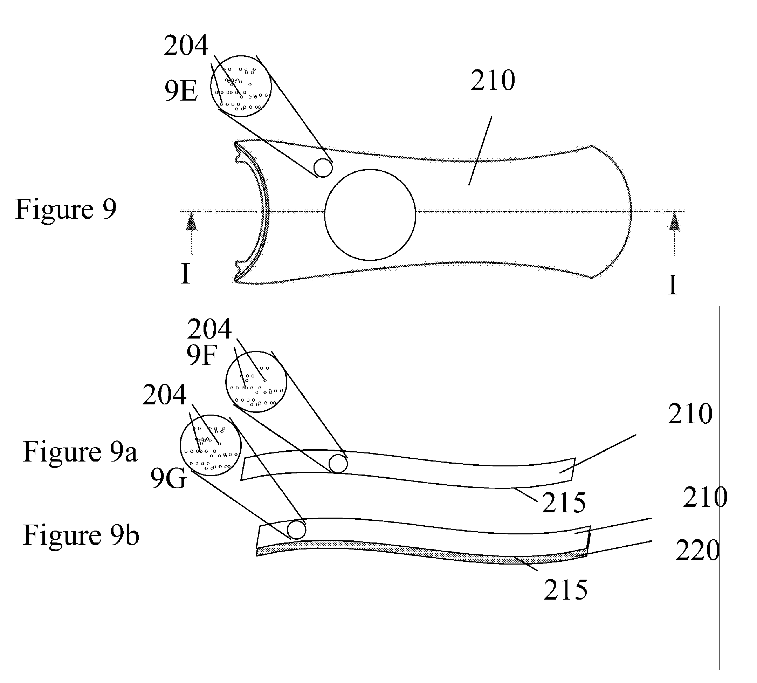

Figure 9 depicts the molded body 210 according to the invention, the body being a covering piece 210 which is intended to be positioned at an outer side of a domestic appliance such as a shaver. The location of the part of the housing 112 in figure 2 may be suitable. The covering piece 210 may be 11.5 cm long and 2 mm thick (at a location in the center of the piece such as at the location indicated by nr 210 in figure 9) and having an length / thickness ratio of 115/2 = 57.5

Reference 9E schematically depicts an enhanced view of a part of the covering piece 210 indicating glass balls 204 having the shape of an air bubble.

Figure 9a schematically depicts the embodiment of the molded body 210 according to the invention along the line I-I indicated in figure 9.

Reference 9F schematically depicts an enhanced view of a part of the covering piece 210 indicating glass balls 204 having the shape of an air bubble.

Figure 9b schematically depicts an alternative to the embodiment of molded body 210 according to the invention along the line I-I indicated in figure 9. The molded body 210 comprises has a wall and a film 220 attached to at least part of the wall. The film is adhered to at least part of the surface 215 of the wall.

Reference 9G schematically depicts an enhanced view of a part of the covering piece 210 indicating glass balls 204 having the shape of an air bubble.

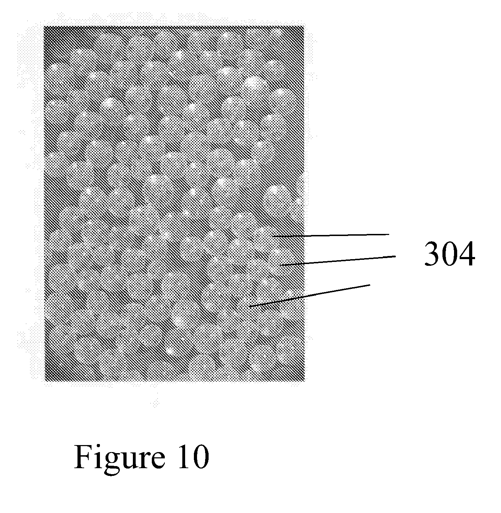

Figure 10 is a microscopic picture of boronsilicate, 1 mm diameter solid-glass particles 304, also called beads or balls, Z273619 1EA (Sigma Aldrich, Germany). In the picture it can be seen that the size and sphere shape of the transparent, colorless glass balls slightly vary.

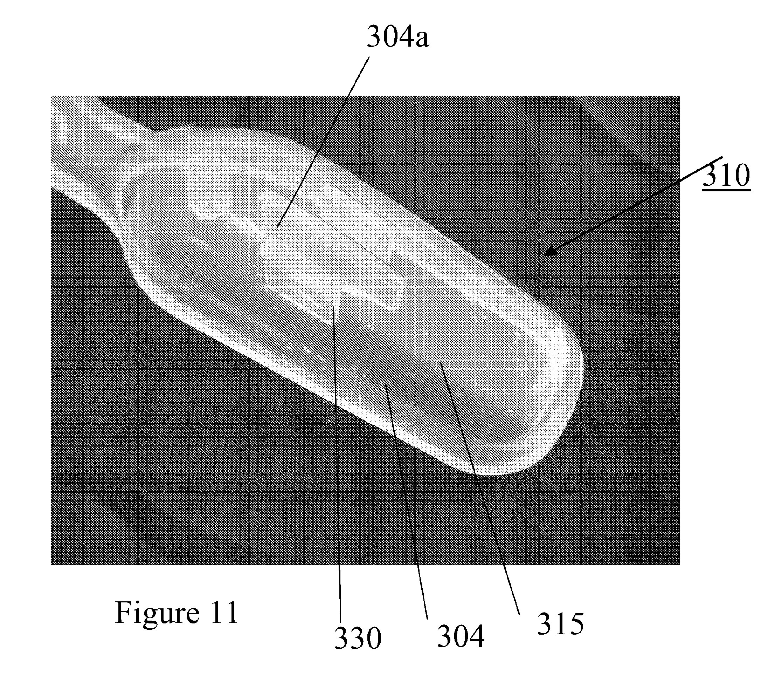

Figure 11 is a picture of the tenth embodiment according to the invention comprising boronsilicate, 1 mm diameter solid-glass beads Z273619 1EA (Sigma Aldrich, Germany) 304.

Into MABS Terlux TR2802 Q434 (transparent Acrylonitril Butadiene Styrene polymer) from BASF, 5 wt % 1,0 mm glass balls 304 were dry mixed. The mixture was added to an injection moulding machine (Engel EC100HL) and a test part called -"Cone"-310, was molded. A photograph of the bottom of the Cone 310 thus obtained is shown in figure 11. The Cone 310 has a wall length of 12 cm and has a wall 315 having a thickness of 2.5 mm. The wall length/thickness ratio is 120/2.5 = 48. The Cone 310 further comprises a rib 330 having a rib thickness of about 2 mm, some glass balls 304a are present inside the rib. The Cone 310 appears to have air-bubbles 304 encapsulated by the polymer.

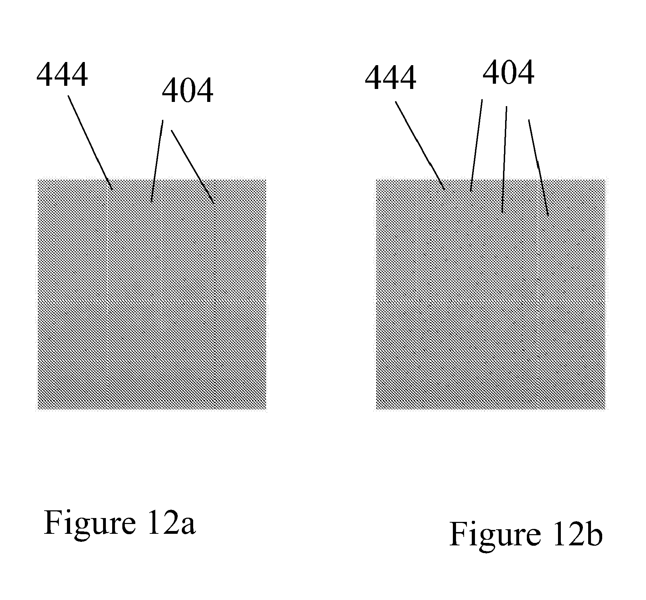

In Figures 12-14 some results of computer modeling experiments are shown.

The results of these experiments illustrate the effect of the concentration of glass balls in combination with the size of the glass balls on the visual impression of a part of the molded body according to the invention.

In the experiments the following data were used:

Specific weight polymer matrix 0.0014 $g/mm^3$.
Specific weight of the glass balls 0.0025 $g/mm^3$.

Two types of concentrations are defined:

Area concentration in the product as number of balls / surface area.
Weight concentration in the material as weight of glass / weight of polymer.

Figure 12a depicts the results of
72 glass balls (404) in a transparent polymer matrix (444),
the balls having a diameter of 0.6 mm,
the balls being randomly distributed over an area of 5 cm x5 cm
Area concentration: 2.9 ball / $cm^2$
Weight concentration: 1 wt %
Result: a quiet visual impression.
Figure 12b depicts the results of
261 glass balls (404) in a transparent polymer matrix (444),
the balls having a diameter of 0.6 mm,
the balls being randomly distributed over an area of 5 cm x5 cm
Area concentration: 10.4 ball / $cm^2$
Weight concentration: 3 wt %
Result: a wild visual impression.

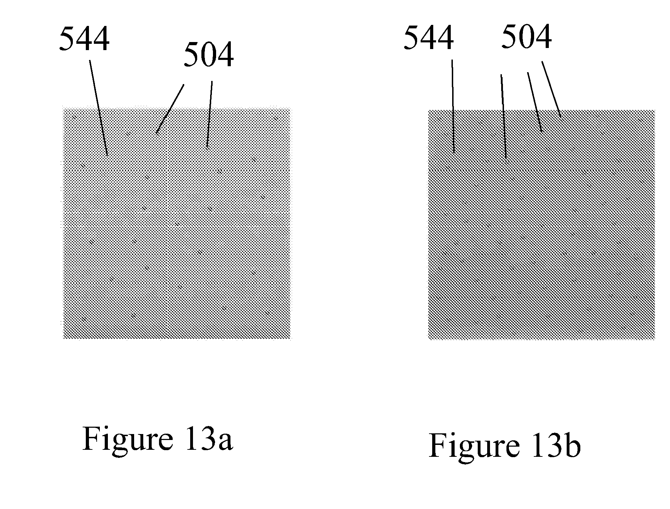

Figure 13a depicts the results of
25 glass balls (504) in a transparent polymer matrix (544),
the balls having a diameter of 1 mm,
the balls being randomly distributed over an area of 5 cm x5 cm
Area concentration: 1 ball / $cm^2$

Weight concentration: 1 wt %
Result: a quiet visual impression.
Figure 13b depicts the results of
72 glass balls (504) in a transparent polymer matrix (544),
the balls having a diameter of 1 mm,
the balls being randomly distributed over an area of 5 cm x5 cm
Area concentration: 2.9 ball / cm$^2$
Weight concentration: 3 wt %
Result: a wild visual impression.

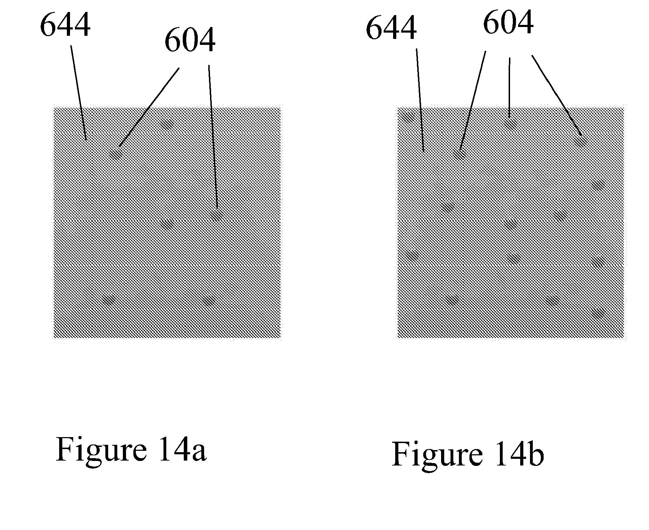

Figure 14a depicts the results of
6 glass balls (604) in a transparent polymer matrix (644),
the balls having a diameter of 3 mm,
the balls being randomly distributed over an area of 5 cm x5 cm
Area concentration: 0.24 ball / cm$^2$
Weight concentration: 2 wt %
Result: a quiet visual impression.
Figure 14b depicts the results of
15 glass balls (604) in a transparent polymer matrix (644),
the balls having a diameter of 3 mm,
the balls being randomly distributed over an area of 5 cm x5 cm
Area concentration: 0.6 ball / cm$^2$
Weight concentration: 5 wt %
Result: a wild visual impression.

While the invention has been illustrated and described in detail in the drawings and foregoing description, illustration and description are to be considered illustrative or exemplary and not restrictive. The invention is not limited to the disclosed embodiments. Variations to the disclosed embodiments can be understood and effected by the skilled person in practicing the claimed invention, from a study of the drawings, the description and the claims. The word "comprising" does not exclude other elements, and the indefinite article "a" or "an" does not exclude a plurality. Any reference sign in the Claims should not be construed as limiting the scope.

**Claims**

1.  A molded body (102,112,122,126,152,162, 192,180,210,310) comprising

    - a wall having a wall thickness, between a minimum and a maximum value
    - the wall comprising a transparent polymeric material (444,544,644) and glass particles (104,114,124,128,154,194,184,204,304,304a, 404,504,604) being embedded in the polymeric material,
    - said glass particles having a shape of an air-bubble and having a particle size in a range of 0.3 mm to 0.9 times the maximum value of the wall thickness.

2.  A molded body (102,112,122,126,152,162, 192,180,210,310) according to claim 1, **characterized in that** the particles (104,114,124,128,154,194,184,204,304,304a, 404,504,604) are transparent.

3.  A molded body (102,112,122,126,152,162, 192,180,210,310) according to claim 1, **characterized in that** the particles (104,114,124,128,154,194,184,204,304,304a, 404,504,604) are colorless.

4.  A molded body (102,112,122,126,152,162, 192,180,210,310) according to claim 1, **characterized in that** a difference between the refractive index of the polymeric material (444,544,644) and the particles (104,114,124,128,154,194,184,204,304,304a, 404,504,604) results in the effect that the particles are visible by the naked eye.

5.  A molded body (102,112,122,126,152,162, 192,180,210,310) according to claim 1, **characterized in that** the particles (104,114,124,128,154,194,184,204,304,304a, 404,504,604) comprise a notch or a protrusion to obtain a course shape.

6.  A molded body (102,112,122,126,152,162, 192,180,210,310) according to claim 1, **characterized in that** the minimum wall thickness is at least 0.4 mm and the maximum wall thickness is at least 6 mm.

7.  A molded body (102,112,122,126,152,162, 192,180,210,310) according to claim 1, **characterized in that** the wall has a length (L) in a range of 5 to 200 times the maximum value of the wall thickness.

8.  A molded body (102,112,122,126,152,162, 192,180,210,310) according to claim 1, **characterized in that** the wall comprises 0.5-40 wt% glass particles (104,114,124,128,154,194,184,204,304,304a, 404,504,604) and 60-99.5 wt% transparent polymeric material (444,544,644).

9.  A molded body (102,112,122,126,152,162, 192,180,210,310) according to claim 1, **characterized in that** the body comprises a film (220) attached to at least a part of the wall.

10. A molded body (102,112,122,126,152,162, 192,180,210,310) according to claim 9, **characterized in that** the film (220) comprises a decoration, logo or information to provide the user with a visual impression.

11. A molded body (102,152,192,180) according to claim 1, **characterized in that** the body is at least a part of reservoir for holding a substance.

12. A molded body (112,122,210) according to claim 1, **characterized in that** the body is at least a part of a housing of a domestic appliance, a personal care appliance or a health care appliance.

13. A polymer composition comprising a transparent polymeric material (444,544,644) and glass particles (104,114,124,128,154,194,184,204,304,304a, 404,504,604) having a shape of an air-bubble at least part of said particles being in a particle size range of 0.6 - 3.0 mm.

14. A polymer composition according to claim 13, **characterized in that** the amount of particles (104,114,124,128,154,194,184,204,304,304a, 404,504,604) is between 0.1 wt% and 80 wt %.

15. A polymer composition according to claim 14, **characterized in that** the amount of particles (104,114,124,128,154,194,184,204,304,304a, 404,504,604) is between 0.4 and 40 wt %.

16. An appliance comprising a molded body (102,112,122,126,152,162, 192,180,210,310) according to claim 1 and being defined by this claim, the molded body comprising

    - a wall having a wall thickness, between a minimum and a maximum value
    - the wall comprising a transparent polymeric material (444,544,644) and
    - glass particles (104,114,124,128,154,194,184,204,304,304a, 404,504,604) being embedded in the polymeric material,
    - the glass particles having a shape of an air-bubble and having a particle size in a range of 0.3 mm to 0.9 times the maximum value of the wall thickness.

17. A use of transparent, colorless, air bubble shaped, glass particles in a molded body (102,112,122,126,152,162, 192,180,210,310) comprising

    - a wall having a wall thickness, between a minimum and a maximum value,
    - the wall comprising a transparent polymeric material (444,544,644) and glass particles (104,114,124,128,154,194,184,204,304,304a, 404,504,604) being embedded in the polymeric material and
    - the glass particles having a particle size in a range of 0.3 mm to 0.9 times the maximum value of the wall thickness,

    to provide a visual appearance of air bubbles.

18. A method of manufacturing a molded body (102,112,122,126,152,162, 192,180,210,310) having a wall having a wall thickness, between a minimum and a maximum value the wall comprising a polymeric material (444,544,644) and the glass particles (104,114,124,128,154,194,184,204,304,304a, 404,504,604) being embedded in the polymeric material, comprising the steps of:

    - kneading the glass particles having a shape of an air-bubble and having a particle size in a range of 0.3 mm to 0.9 times the maximum value of the wall thickness together with the transparent polymeric material and thereafter

- shaping the body by means of injection molding.

Figure 1

EP 1 916 081 A1

Figure 2

114

3A

112

110

Figure 3

EP 1 916 081 A1

Figure 4

Figure 5

EP 1 916 081 A1

160

162

166

164

6A

Figure 6

Figure 7

EP 1 916 081 A1

184

8A

180

Figure 8

Figure 9

Figure 9a

Figure 9b

304

Figure 10

310

304a

315

304

330

Figure 11

444     404

444    404

Figure 12a

Figure 12b

544    504

Figure 13b

544    504

Figure 13a

644    604

Figure 14a

644    604

Figure 14b

EP 1 916 081 A1

**European Patent Office**

**EUROPEAN SEARCH REPORT**

Application Number

EP 06 12 3008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 947 388 A (OHKAWA HIDEO ET AL) 30 March 1976 (1976-03-30) * claims 1,5 * ----- | 1-4,8, 13-18 | INV. B29C45/00 C08K7/20 |
| X | GB 952 258 A (CATAPHOTE CORP) 11 March 1964 (1964-03-11) * page 3, line 31 - line 55 * * page 3, line 84 - line 89 * ----- | 13 | |
| D,A | US 6 672 552 B1 (JAO CHZH-LIN [TW]) 6 January 2004 (2004-01-06) * claim 1 * ----- | 1-18 | |

TECHNICAL FIELDS SEARCHED (IPC)

B29C
C08K

The present search report has been drawn up for all claims

| Place of search | Date of completion of the search | Examiner |
|---|---|---|
| Munich | 30 March 2007 | Attalla, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
### ON EUROPEAN PATENT APPLICATION NO.

EP 06 12 3008

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2007

| Patent document cited in search report | | Publication date | Patent family member(s) | | Publication date |
|---|---|---|---|---|---|
| US 3947388 | A | 30-03-1976 | GB 1448042 A<br>JP 1100458 C<br>JP 50010363 A<br>JP 56034864 B | | 02-09-1976<br>18-06-1982<br>03-02-1975<br>13-08-1981 |
| GB 952258 | A | 11-03-1964 | DE 1291434 B | | |
| US 6672552 | B1 | 06-01-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6672552 A
- US 20030175499 A